# EUROPÄISCHE PATENTANMELDUNG

(11) **EP 0 806 857 A2**
(43) Veröffentlichungstag der Anmeldung: **12.11.1997**
(21) Anmeldenummer: 97106737.6
(22) Anmeldetag: 23.04.1997
(51) Int. Cl.: H04M 1/02

(54) **Handapparat für ein Funktelefonsystem**

(30) Priorität: 10.05.1996 DE 19618981
(71) Anmelder: NOKIA MOBILE PHONES LTD., 02150 Espoo (FI)
(72) Erfinder: Michalzik, Dirk, 45964 Gladbeck (DE)
(74) Vertreter: TER MEER STEINMEISTER & PARTNER GbR

(57) **Zusammenfassung**

Die Erfindung betrifft einen Handapparat für ein Funktelefonsystem, mit einer vorderen Gehäuseschale (2) und einer mit dieser verbindbaren hinteren Gehäuseschale (1). Der Handapparat weist in seinem Innern eine Verriegelungseinrichtung (22, 23) auf, die in einer Verriegelungsstellung die Gehäuseschalen (1, 2) miteinander verriegelt und in einer Entriegelungsstellung die Verriegelung aufhebt. Ferner enthält der Handapparat ebenfalls in seinem Innern eine Blockiereinrichtung (30, 32), die einen selbständigen Übergang der Verriegelungseinrichtung aus der Verriegelungsstellung in die Entriegelungsstellung verhindert. Eine Betätigung der Blockiereinrichtung (30, 32) ist nur über einen in der Regel schwer auffindbaren Weg möglich.

## Beschreibung

Die Erfindung bezieht sich auf einen Handapparat für ein Funktelefonsystern gemäß dem Oberbegriff des Patentanspruchs 1.

Bei einem solchen Handapparat kann es sich z. B. um ein Mobiltelefon oder um ein schnurloses Telefon handeln. Im allgemeinsten Fall umfaßt der Begriff Handapparat aber auch einen Sprechhörer eines aus Sprechhörer und Steuereinrichtung bestehenden zweiteiligen Funktelefons, z. B. eines Autotelefons.

Üblicherweise besteht ein Handapparat der genannten Art aus einer vorderen Gehäuseschale und einer hinteren Gehäuseschale, die lösbar miteinander verbunden sind, in der Regel durch Schrauben. Diese können leicht herausgedreht werden, so daß sich der Handapparat auch von Laien öffnen läßt, was zu Beschädigungen und ggf. zu Betriebsstörungen führen kann.

Der Erfindung liegt die Aufgabe zugrunde, bei einem Handapparat der eingangs genannten Art dafür zu sorgen, daß er sich von Laien nicht mehr so ohne weiteres öffnen läßt, von einem Fachmann Jedoch schnell und unkompliziert demontiert werden kann.

Die Lösung der gestellten Aufgabe ist im kennzeichnenden Teil des Patentanspruchs 1 angegeben. Vorteilhafte Ausgestaltungen der Erfindung sind den Unteransprüchen zu entnehmen.

Ein für ein Funktelefonsystem vorgesehener Handapparat nach der Erfindung zeichnet sich dadurch aus, daß er in seinem Innern eine Verriegelungseinrichtung aufweist, die in einer Verriegelungsstellung die Gehäuseschalen miteinander verriegelt und in einer Entriegelungsstellung die Verriegelung aufhebt, und daß er ebenfalls in seinem Innern eine Blockiereinrichtung enthält, die einen selbständigen Übergang der Verriegelungseinrichtung aus der Verriegelungsstellung in die Entriegelungsstellung verhindert.

Für einen Laien sind somit die Verriegelungseinrichtung und die Blockiereinrichtung unzugänglich, da sie sich beide im Innern des Handapparats befinden. Er läßt sich daher praktisch nur noch durch Fachpersonal öffnen. Nur dieses kennt mögliche Wege, die Blockiereinrichtung so zu betätigen, daß sie einen Übergang der Verriegelungseinrichtung aus der Verriegelungsstellung in die Entriegelungsstellung erlaubt, so daß eine Trennung der Gehäuseschalen voneinander möglich ist. Die Betriebssicherheit und die Lebensdauer des Handapparats lassen sich dadurch ganz entscheidend verbessern.

Die Verriegelungseinrichtung und die Blockiereinrichtung können räumlich getrennt voneinander angeordnet sein. Möglich ist es aber auch, zumindest Teile der Verriegelungseinrichtung und der Blockiereinrichtung zu einem gemeinsamen Element zusammenzufassen. Dieses Element könnte dann sowohl eine Verriegelungsfunktion als auch eine Blockierfunktion aufweisen.

Als Verriegelungseinrichtung soll eine solche Einrichtung verstanden werden, die bei der Verbindung beider Gehäuseschalen eine Relativverschiebung der zu ihr gehörenden Verriegelungselemente in einer Richtung zuläßt, also zwischen Verriegelungsstellung und Entriegelungsstellung, und ansonsten eine Relativverschiebung der Verriegelungselemente in einer dazu senkrechten Richtung verhindert, wenn diese die Verriegelungsstellung erreicht haben.

Die Blockiereinrichtung dient dann dazu, die Relativverschiebung der Verriegelungselemente in der noch verbleibenden einzigen Richtung zu blockieren.

Nach einer vorteilhaften Weiterbildung der Erfindung ist die Blockiereinrichtung durch eine Öffnung hindurch betätigbar, die sich in einer Außenwand einer der Gehäuseschalen befindet, wobei die Öffnung durch ein entfernbares Außenwandelement dieser Gehäuseschale verschlossen ist. Dabei kann das Außenwandelement auch in der Öffnung liegen.

Für den Fachmann wird somit ein einfacher Weg zur Betätigung der Blockiereinrichtung zur Verfügung gestellt, während es für den Laien nicht so einfach ist, diesen Weg aufzufinden, zumal dann, wenn das Außenwandelement etwa durch ein Typenschild abgedeckt oder durch eine durchgehende Wandstrukturierung der Gehäuseschale nur schlecht erkennbar ist. Andererseits kann selbst bei abgenommenem Außenwandelement dafür Sorge getragen werden, daß Mittel zur Betätigung der Blockiereinrichtung nur schwer lokalisierbar sind, so daß es auch in diesem ungünstigen Fall nur wenig wahrscheinlich ist, daß ein Laie diese Mittel entdeckt.

Nach einer Ausgestaltung der Erfindung gehören zur Verriegelungseinrichtung von einer der Gehäuseschalen getragene Nasen und von der anderen Gehäuseschalen getragene Haken, die parallel zu einer Verbindungsebene der Gehäuseschalen verschiebbar sind. Die Verschieberichtung kann hier beliebig gewählt werden, wird jedoch vorzugsweise in Längsrichtung des Handapparats liegen. Wird die Verriegelungsstellung erreicht, so sind die Nasen in die Haken eingefahren. Durch die Blockiereinrichtung wird dann jede weitere Relativverschiebung zwischen Nasen und Haken parallel zur Verbindungsebene der Gehäuseschalen blockiert, so daß dann eine Trennung der Gehäuseschalen voneinander nicht mehr möglich ist.

Nach einer vorteilhaften anderen Ausgestaltung der Erfindung sind die Gehäuseschalen, wenn sie aufeinander liegen, parallel zueinander verschiebbar, wobei sowohl die Nasen als auch die Haken fest an ihnen angebracht sind. Beispielsweise können die Nasen und Haken einstückig mit den jeweiligen Gehäuseschalen verbunden sein. Bestehen die Gehäuseschalen aus Kunststoff, so gilt dies dann auch für die Nasen und Haken. Die Verriegelungseinrichtung läßt sich dadurch in platzsparender Weise ausbilden und somit kostengünstig herstellen.

Nach einer noch anderen Ausgestaltung der Erfindung enthält die Blockiereinrichtung wenigstens ein Rastelement, das von einer der Gehäuseschalen getragen wird und hinter eine Kante der anderen Gehäuseschale eingreift, wenn sich die Verriegelungseinrichtung in der Verriegelungsstellung befindet. Je nach Aufbau des Handapparats kann ein solches Rastelement an einer geeigneten Stelle angeordnet sein. Als vorteilhaft hat es sich jedoch erwiesen, jeweils in der Bahn der Nasen bzw. Haken separate Rastelemente vorzusehen, beispielsweise an den beiden Längsseiten des Handapparats, wenn entlang dieser Längsseiten auch die Nasen bzw. Haken angeordnet sind. Dies führt zu einer sichereren Blockierung der Verriegelungsstellung.

Das Rastelement kann z. B. als Rastarm ausgebildet sein, der schwenkbar an der Gehäuseschale gelagert ist. Im Falle zweier Rastarme können diese über einen gemeinsamen Bügel miteinander verbunden sein. Jeder der Rastarme weist dabei an seiner freien Seite eine Klinke auf, die dann, wenn die Verriegelungseinrichtung in der Verriegelungsstellung ist, hinter eine entsprechende Kante der anderen Gehäuseschale eingreift.

Auch Rastarme und Bügel können aus Kunststoff bestehen, so daß für die Verriegelungseinrichtung und die Blockiereinrichtung keine Metallteile benötigt werden. Dies führt dazu, daß der Handapparat besser recycelbar ist.

In Weiterbildung der Erfindung kann das Rastelement mit einem Zugelement gekoppelt sein, das im Bereich der Öffnung liegt. Im Falle zweier Rastelemente könnte das Zugelement auch mit dem die Rastelemente verbindenden Bügel gekoppelt sein. Über dieses Zugelement lassen sich somit die Rastelemente, also die Blockiereinrichtung, betätigen, wobei zur besseren Positionierung des Zugelements deren freies Ende auch in einer Führung geführt sein kann. Das Zugelement selbst läßt sich an seinem freien Ende z. B. mit einem Schlitz versehen, in den ein spitzer Gegenstand, z. B. ein Schraubenzieher, eingeführt werden kann, um das Zugelement in seiner Längsrichtung zu verstellen.

Entsprechend einem Merkmal der Erfindung wird das Zugelement von dem in der Öffnung liegenden Außenwandelement abgedeckt. Das Außenwandelement kann dabei so positioniert sein, daß es in seiner Sollage das Zugelement niederdrückt und damit das Rastelement hinter die Kante, wenn sich die Verriegelungseinrichtung in der Verriegelungsstellung befindet. Es ist somit kein separater Mechanismus nötig, mit dem z. B. das Rastelement in Richtung Kante vorgespannt wird. Dies vereinfacht den Aufbau der Blockiereinrichtung.

Das Außenwandelement kann in seiner Ebene zwischen zwei Stellungen verschiebbar sein und in jeder Stellung das Zugelement abdecken, so daß es auch bei den verschiedenen Verschiebestellungen des Außenwandelements nicht so ohne weiteres zugänglich ist. Zugänglich wird das Zugelement erst dann, wenn das Außenwandelement gänzlich abgenommen wird, wozu allerdings noch weitere Maßnahmen erforderlich sind. Das Zugelement ist somit weitestgehend gegen unautorisierten Zugriff geschützt. Durch das Außenwandelement kann z. B. eine sogenannte SIM-Karte des Handapparats abgedeckt werden, die sich ebenfalls in der Öffnung bzw. unterhalb dieser befindet.

Nach einem anderen Ausführungsbeispiel der Erfindung gehören zur Verriegelungseinrichtung wenigstens zwei jeweils Nasen oder Haken tragende Verriegelungsstangen, die parallel zu einer Verbindungsebene der Gehäuseschalen verschiebbar und an einer der Gehäuseschalen gelagert sind, sowie Haken oder Nasen an der anderen Gehäuseschale. Zur Bildung der Blockiereinrichtung ist dabei ein Ende der jeweiligen Verriegelungsstangen in einer Halterung an der einen Gehäuseschale klemmend verschiebbar gehalten.

Die Verriegelungsstangen befinden sich vorzugsweise an beiden Längsseiten des Handapparats und erstrecken sich in dessen Längsrichtung. Sie selbst sind in ihrer Längsrichtung verschiebbar. Zur Verschiebung der Verriegelungsstangen können diese im Bereich ihres anderen Endes jeweils mit einem in den Batterieraum des Handapparats hineinragenden Ansatz versehen sein. Dabei kann der jeweilige Ansatz unterhalb von im Batterieraum befindlichen Batterien zu liegen kommen, um ihn gegen unsachgemäßes Betätigen zu schützen. Die Verriegelungsstangen können auch miteinander verbunden sein, z. B. über die genannten Ansätze, so daß nur eine Verschiebebetätigung erforderlich ist.

Wird nach Herausnahme der Batterien der jeweilige Ansatz verschoben, um die Gehäuseschalen voneinander trennen zu können, so muß zu dieser Verschiebung zunächst vergleichsweise viel Kraft aufgewendet werden, um die Wirkung der Blockiereinrichtung zu überwinden. Erst dann ist eine weniger Kraft erforderliche Verschiebung möglich, um die Verriegelungseinrichtung aus der Verriegelungsstellung in die Entriegelungsstellung zu überführen. Durch Wahl einer höheren Klemmkraft der Blockiereinrichtung wird somit Sorge dafür getragen, daß ein Laie auch dann, wenn er die Ansätze nach Öffnen des Batterieraums entdecken sollte, nicht so ohne weiteres die Entriegelung der Gehäuseschalen vornehmen kann.

Sind die beiden Verriegelungsstangen über die Ansätze miteinander verbunden, so kann sich ausgehend z. B. vom Verbindungsbereich der Ansätze noch eine weitere Verriegelungsstange zur Verriegelung der Gehäuseschalen im Bereich ihrer Stirnseiten erstrecken, was zu einer noch sichereren Verbindung zwischen den beiden Gehäuseschalen führt. Diese weitere Verriegelungsstange befindet sich vorzugsweise in der Mittelachse des Handapparats und erstreckt sich unterhalb des Batteriefachs in Längsrichtung zur Verriegelung der Gehäuseschalen im Bereich der z. B. unteren Stirnseite.

Ausführungsbeispiele der Erfindung werden nachfolgend unter Bezugnahme auf die Zeichnung näher erläutert. Es zeigen:
**Figur 1a** einen Längsschnitt durch ein Mobiltelefon senkrecht zu dessen Hauptebene, das mit einer Verriegelungseinrichtung und einer Blockiereinrichtung nach einem ersten Ausführungsbeispiel der Erfindung ausgestattet ist;
**Figur 1b** eine Draufsicht auf die Rückseite des Mobiltelefons nach Figur 1a;
**Figuren 2a bis 2d** Längsschnitte entsprechend der Figur 1a bei unterschiedlicher Verschiebestellung der zum Mobiltelefon gehörenden Gehäuseschalen; und
**Figuren 3a bis 3h** eine Verriegelungseinrichtung mit zugehöriger Blockiereinrichtung für ein Mobiltelefon gemäß einem zweiten Ausführungsbeispiel der Erfindung.

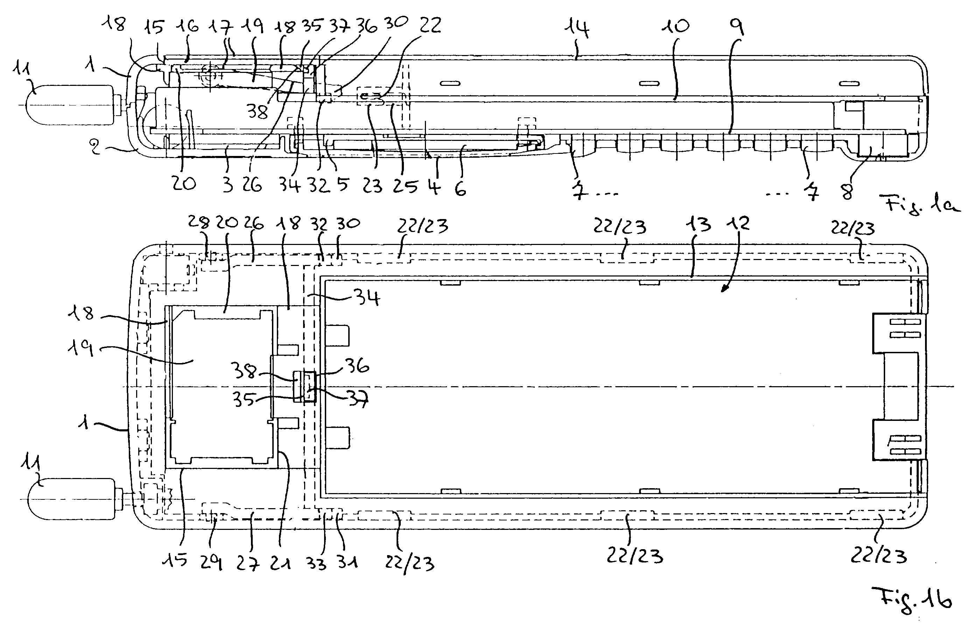

Das als Handapparat ausgebildete Mobiltelefon nach den Figuren 1a und 1b gehört zu einem Funktelefonsystem, bei dem Mobiltelefone über eine feste Basisstation miteinander kommunizieren können. Ein derartiges Mobiltelefon kann auch als Handy bezeichnet werden.

Der Handapparat nach den Figuren 1a und 1b besteht aus einer hinteren Gehäuseschale 1 und einer vorderen Gehäuseschale 2. Es handelt sich hier um quasi Halbschalen, die zum Aufbau des Handapparats miteinander verbunden werden. Sie lassen sich auch wieder voneinander lösen, wie noch beschrieben wird. Die vordere Gehäuseschale 2 trägt einen Lautsprecher 3, ein hinter einem Fenster 4 in einem Rahmen 5 angeordnetes Display 6, mehrere Tasten 7 und ein Mikrophon 8. Sämtliche Einheiten 3 bis 8 befinden sich auf einer Hauptleiterplatte 9. Diese ist in geeigneter Weise zwischen der vorderen Gehäuseschale 2 und der hinteren Gehäuseschale 1 befestigt. Sämtliche elektrischen Komponenten auf der Leiterplatte 9 sind durch ein Schirmblech 10 abgeschirmt. Über eine nicht dargestellte Leitung sind die ebenfalls nicht dargestellten Empfangs- und Sendeeinrichtungen auf der Leiterplatte 9 mit einer Antenne 11 verbunden.

Die hintere Gehäuseschale 1 dient am unteren Ende des Handapparats zur Bildung eines Batterieraums 12, in welchem sich ein Batteriepack 14 zum Betrieb des Handapparats unterbringen läßt. Der Batterieraum 12 ist bei miteinander verbundenen Gehäuseschalen 1 und 2 über eine Öffnung 13 zugängig und wird vom Batteriepack 14 bündig zur Außenhaut des Handapparats ausgefüllt. Der Batteriepack 14 ist in Figur 1a zu erkennen und in Figur 1b der Übersicht wegen fortgelassen.

Am oberen und in der Nähe der Antenne 11 liegenden Ende der hinteren Gehäuseschale 1 befindet sich an deren Rückseite quasi in Verlängerung der Außenwand des Batteriepacks 14 eine Öffnung 15, die von einem Außenwandelement 16 verschlossen ist. Dieses ist in Figur 1a zu erkennen. Das Außenwandelement 16 fluchtet im Normalfall mit der Außenwand des Batteriepacks 14 und bildet zusammen mit diesem die Rückwand der hinteren Gehäuseschale 1. Unmittelbar unterhalb des Außenwandelements 16 liegt parallel zu diesem eine Führungsschiene 17, durch die das Außenwandelement 16 in Längsrichtung des Handapparats geführt und verschiebbar ist. Einerseits läßt sich mit dem Außenwandelement 16, wie in Figur 1a gezeigt, die Öffnung 15 verschließen, während andererseits das Außenwandelement 16 in Richtung zum unteren Ende des Handapparats verschoben werden kann, also in Richtung des Mikrophons, wobei allerdings vorher der Batteriepack 14 entfernt werden muß. Dabei ist die Verschiebung des Außenwandelements 16 in dieser Richtung aber begrenzt, wie noch ausgeführt wird. Die hintere Gehäuseschale 1 und die Führungsschiene 17 können z. B. einstückig miteinander verbunden sein.

Unterhalb der Öffnung 15 hält die hintere Gehäuseschale 1 einen Träger 18 für eine Steuerkartenhalterung 19, die durch die Öffnung 15 hindurch zugänglich ist. Auch der Träger 18 kann mit der hinteren Gehäuseschale 1 einstückig verbunden sein. Bei der Steuerkartenhalterung 19 kann es sich um eine solche zur Halterung einer sogenannten SIM-Karte handeln. Diese Steuerkartenhalterung 19 kommt quasi in einer hinteren Ausnehmung 20 des Trägers 18 zu liegen. Im Betriebszustand liegen das Außenwandelement 16, die Führungsschiene 17 und die Steuerkartenhalterung 19 parallel zueinander. Zum Öffnen der Steuerkartenhalterung 19 wird das Außenwandelement 16 so weit in Richtung zum unteren Ende des Handapparats verschoben, bis die obere Stirnseite des Außenwandelements 16 mit dem unteren Rand 21 der Ausnehmung 20 fluchtet. Jetzt kann die Steuerkartenhalterung 19 geöffnet werden, um eine Steuerkarte einzulegen oder herauszunehmen. Dabei ist die Position des Außenwandelements 16 durch nicht dargestellte Rastmittel fixiert. Das Außenwandelement 16 kann somit in dieser Betriebsstellung nicht vollständig vom Träger 18 abgleiten.

In Übereinstimmung mit der Erfindung sind die hintere Gehäuseschale 1 und die vordere Gehäuseschale 2, wenn sie mit ihren nach innen weisenden Flächen aufeinanderliegen, wenigstens bereichsweise parallel zueinander verschiebbar, und zwar vorzugsweise in Längsrichtung des Handapparats. Um eine mechanisch feste Verbindung zwischen der hinteren Gehäuseschale 1 und der vorderen Gehäuseschale 2 herzustellen, ist im vorliegenden Fall die vordere Gehäuseschale 2 mit Nasen 22 versehen, von denen mehrere in Längsrichtung des Handapparats nebeneinanderliegend angeordnet sind. Die Nasen 22 befinden sich an den gegenüberliegenden Seitenflächen der vorderen Gehäuseschale 2 und stehen von diesen nach innen ab. Sie können aus Kunststoff bestehen und einstückig mit der vorderen Gehäuseschale 2 verbunden sein. In Figur 1a ist nur eine dieser Nasen 22 zu erkennen.

Andererseits befinden sich an der hinteren Gehäuseschale 1 für die jeweiligen Nasen 22 vorgesehene Haken 23, die ebenfalls an den gegenüberligenden Innenseiten der hinteren Gehäuseschale 1 angeordnet sind und von diesen nach innen abstehen. Auch diese Haken 23 können wie die hintere Gehäuseschale 1 aus Kunststoff hergestellt und mit dieser einstückig verbunden sein. Die Haken 23 weisen jeweils einen sich in Längsrichtung des Handapparats erstreckenden Nasenaufnahmebereich 24 auf, der schließlich in eine Mündung 25 übergeht, die sich in Richtung zur vorderen Gehäuseschale 2 hin öffnet. Werden die Gehäuseschalen 1 und 2 mit ihren Innenseiten aufeinandergesetzt, so werden zunächst die Nasen 22 in die Mündungen 25 geführt, bis die Gehäuseschalen 1 und 2 aufeinander zu liegen kommen. Danach werden die Gehäuseschalen 1 und 2 in ihrer Längsrichtung parallel zueinander verschoben, so daß jetzt die Nasen 22 in die jeweiligen Nasenaufnahmebereiche 24 der Haken 23 hineingleiten. Schlagen sie in Verschieberichtung gesehen dann gegen die Haken 23 an, so haben die Gehäuseschalen 1 und 2 ihre Endstellung erreicht, in der die Stirnseiten der Gehäuseschalen 1 und 2 miteinander fluchten. Sie lassen sich dann nicht mehr dadurch voneinander trennen, daß sie senkrecht zu ihrer Verbindungsebene bewegt werden. Um auch eine erneute Relativverschiebung der Gehäuseschalen 1 und 2 in ihrer Längsrichtung zu verhindern, ist erfindungsgemäß eine Blockiereinrichtung vorgesehen, deren Aufbau nachfolgend beschrieben wird. Zuvor sei aber noch darauf hingewiesen, daß die Figur 1b insgesamt sechs Nasen-/Hakenkombinationen 22, 23 zeigt. Drei davon befinden sich in jeweils gleichem Abstand voneinander an den jeweiligen Innenseiten der Gehäuseschalen 1 und 2.

Wie bereits oben erwähnt, dient die Blockiereinrichtung dazu, eine Relativverschiebung der Gehäuseschalen 1 und 2 in ihrer Längsrichtung zu verhindern, wenn die Nasen 22 in die Nasenaufnahmebereiche 24 der Haken 23 eingeführt worden sind.

Die Blockiereinrichtung besteht im vorliegenden Fall aus zwei Rastarmen 26 und 27, von denen sich jeweils einer an einer der Seiten der hinteren Gehäuseschale 1 befindet. Dort ist sein zur Antenne 11 weisendes Ende jeweils an der Innenseite der hinteren Gehäuseschale 1 schwenkbar angelenkt. Hierzu dienen Lager 28 und 29. Das von der Antenne 11 wegweisende Ende eines jeden Rastarms ist mit einer Klinke 30, 31 einstückig verbunden. Diese Klinke weist in Richtung zur vorderen Gehäuseschale 2. Sind die Rastarme 26, 27 am weitesten von der hinteren Gehäuseschale 1 weggeschwenkt, so hintergreifen die Klinken 30, 31 eine an der vorderen Gehäuseschale 2 jeweils vorgesehene Kante 32, 33, die sich an der Innenseite der vorderen Gehäuseschale 2 befindet und z. B. durch einen Steg oder eine Ausnehmung gebildet sein kann. Auf diese Weise wird die Verriegelungsstellung der Verriegelungseinrichtung fixiert, so daß sich die Gehäuseschalen 1 und 2 nicht mehr voneinander lösen lassen. Genauer gesagt verhindern in den Figuren 1a und 1b die Haken 23 eine Verschiebung der Nasen nach links, während durch die Rastarme eine Verschiebung der Kanten 32, 33 nach rechts verhindert wird. Eine Trennung der Gehäuseschalen 1 und 2 senkrecht voneinander wird ebenfalls durch die Nasen-/Hakenkombination 22, 23 verhindert, also durch die Verriegelungswirkung der Verriegelungseinrichtung.

Beide Rastarme 26, 27 sind über einen Bügel 34 miteinander verbunden, der sich quer zum Handapparat erstreckt und unterhalb des Bereichs des Trägers 18 zu liegen kommt, welcher am weitesten von der Antenne 11 entfernt ist. In diesem Bereich weist der Träger 18 eine Trägeröffnung 35 auf, in die sich ein stangenförmiges Zugelement 36 hineinerstreckt, das mit dem Bügel 34 gekoppelt ist. Dieses Zugelement 36 fluchtet mit der oberen Fläche des Trägers 18 und weist einen seitlichen Einschnitt 37 auf. Um diesen seitlichen Einschnitt 37 zugänglich zu machen, ist am entsprechenden Rand der Trägeröffnung 35 eine Abschrägung 38 vorgesehen.

Soll die Blockiereinrichtung die Verriegelungseinrichtung freigeben, sollen also die Rastarme 26 und 27 außer Eingriff mit den Kanten 32 und 33 gebracht werden, so geschieht dies durch Herausziehen des Zugelements 36 aus der Trägeröffnung 35. Um diesen Vorgang zu erleichtern, kann mit einem Schraubenzieher oder einem anderen spitzen Gegenstand in den seitlichen Einschnitt 37 gefaßt werden. Dieser ist infolge der Abschrägung 38 zugänglich, wenn die Rastarme 26, 27 noch die Kanten 32, 33 hintergreifen.

Um das Zugelement 36 allerdings aus der Trägeröffnung 35 herausziehen zu können, ist es erforderlich, zuvor das Außenwandelement 16 vollständig herauszunehmen. Hierzu muß auch der Batteriepack 14 entfernt werden, wie eingangs erläutert. Erst dann kann die Blockiereinrichtung in eine Betriebsstellung gebracht werden, in der sie eine Verschiebung der Verriegelungseinrichtung aus der Verriegelungsstellung in die Entriegelungsstellung erlaubt. Befindet sich die Verriegelungseinrichtung in der Verriegelungsstellung, so werden die Rastarme 26, 27 dadurch in Eingriff mit den Kanten 32, 33 gebracht, daß über das Außenwandelement 16 das Zugelement 36 nach unten gedrückt wird. Besondere Vorspannmittel für die Rastarme 26, 27 sind somit nicht erforderlich.

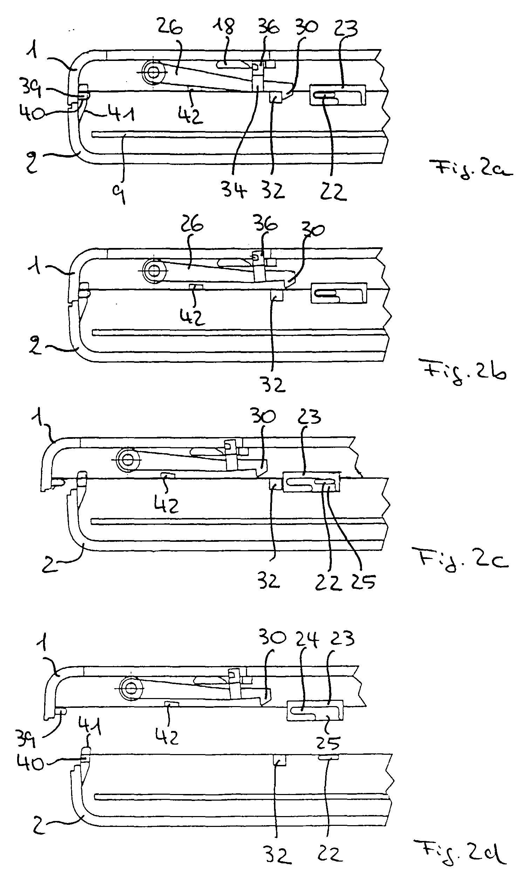

Die Figuren 2a bis 2d zeigen im einzelnen nochmals die Abläufe beim Zerlegen des Handapparats bzw. beim Trennen der Gehäuseschalen 1 und 2 voneinander. Dabei sind der Übersicht wegen das Außenwandelement 16 und die Führungsschiene 17 fortgelassen sowie auch der Batteriepack 14. Ferner sind gleiche Elemente wie in den Figuren 1a und 1b mit denselben Bezugszeichen versehen und werden nicht nochmals beschrieben.

In der Figur 2a befindet sich die Verriegelungseinrichtung in der Verriegelungsstellung, wobei also die Nasen 22 vollständig in die Haken 23 eingefahren sind. Die Blockiereinrichtung befindet sich in der Blockierstellung, so daß die Klinke 30 die Kante 32 bzw. den Ansatz hintergreift. Das obere Ende des Zugelements 36 fluchtet mit der oberen Fläche des Trägers 18. Dieser ist hier der Übersicht wegen nur teilweise abgebildet. Um auch eine stirnseitige Verriegelung der Gehäuseschalen 1 und 2 zu erreichen, können hier mehrere Paare von Nasen 39 und diese aufnehmende Öffnungen 40 vorhanden sein. Die Nasen weisen dann nach innen und befinden sich an der hinteren Gehäuseschale 1, während die Öffnungen 40 in einem innen liegenden Ansatz 41 der Gehäuseschale 2 vorhanden sind. Dies ist am besten in Figur 2d zu erkennen.

In Figur 2b wird die Blockierstellung der Blockiereinrichtung aufgehoben, und zwar dadurch, daß das Zugelement 36 angehoben wird. Klinke 30 und Kante 32 kommen somit außer Eingriff. Jetzt können entsprechend der Figur 2c die Gehäuseschalen 1 und 2 in Längsrichtung relativ zueinander verschoben werden, so daß die Klinke 30 über die Kante 32 nach links in Figur 2c hinwegläuft. Gleichzeitig kommt die Nase 22 frei und im Bereich der Mündung 25 zu liegen. Auch die Nase 39 wird aus der Öffnung 40 herausbewegt.

Schließlich kann entsprechend Figur 2d nunmehr die hintere Gehäuseschale 1 von der vorderen Gehäuseschale 2 senkrecht abgenommen werden. Der Handapparat ist jetzt geöffnet. Um ihn wieder zu schließen, verlaufen die Vorgänge in umgekehrter Reihenfolge.

Um zu verhindern, daß die Rastarme 26, 27 zu weit aus der hinteren Gehäuseschale 1 herausgeschwenkt werden, kann diese mit entsprechenden Stoppern 42 versehen sein. Darüber hinaus kann die untere Seite der Klinke 30 angeschrägt sein, damit sie im vorliegenden Fall über den die Kante bildenden Ansatz 32 hinweggleiten kann, wenn die Nasen 22 in den Nasenaufnahmebereich 24 einlaufen.

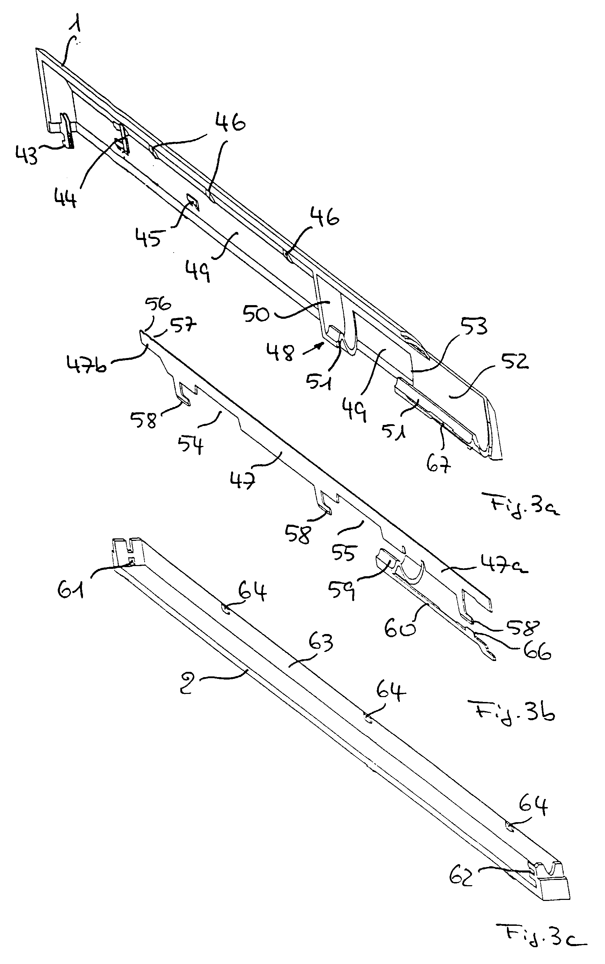

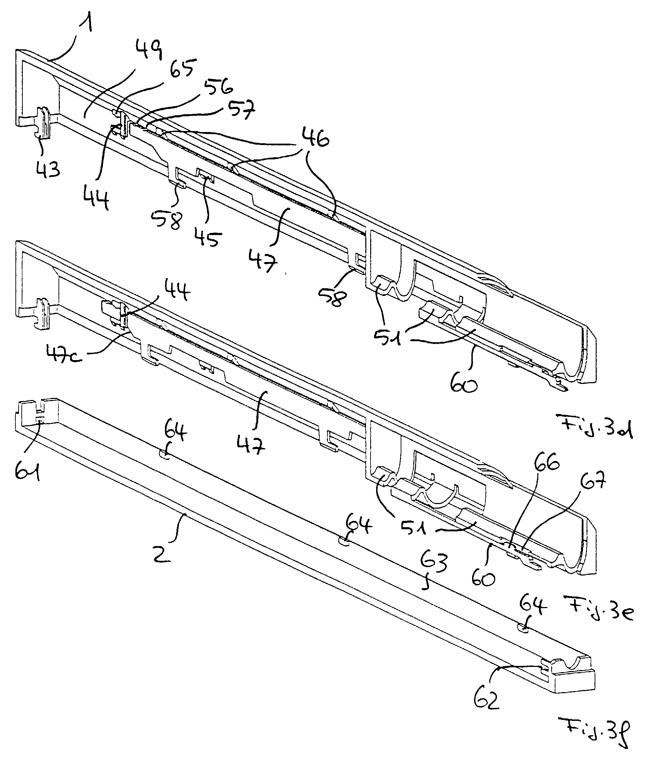

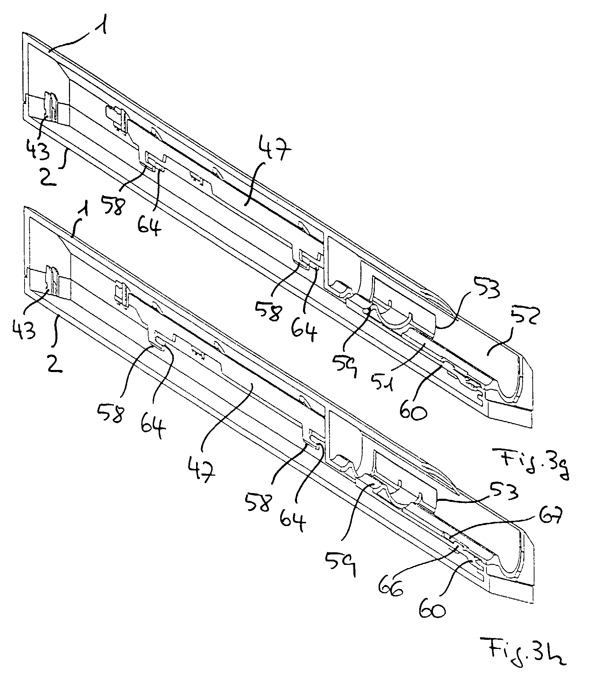

Die Figuren 3a bis 3h zeigen ein zweites Ausführungsbeispiel der Erfindung. Sie sind insofern vereinfacht dargestellt, als sie nur die Seitenwandbereiche der hinteren und vorderen Gehäuseschale zeigen. Dabei wird nur auf den Aufbau einer Seitenwand des Handapparats Bezug genommen, da der Aufbau der anderen Seitenwand des Handapparats dazu symmetrisch ist.

Die Figur 3a zeigt den Aufbau der hinteren Gehäuseschale 1 im Bereich ihrer Seitenwand. An der hinteren Stirnseite ist ein in Richtung zur vorderen Gehäuseschale 2 weisender Positionierungshaken 43 angeordnet. An der Innenlängsseite der Seitenwand befinden sich dagegen mehrere Führungselemente 44, 45 und 46 zur Führung einer Verriegelungsstange 47, wie sie in Figur 3b gezeigt ist. In einem unteren Abschnitt der hinteren Gehäuseschale 1 ragt nach innen ein Wandelement 48, von dem ab der Batterieaufnahmebereich beginnt. Dieses Wandelement 48 steht im Abstand zur Seitenwand 49 der hinteren Gehäuseschale 1, wobei die Verriegelungsstange 47 zwischen Wandelement 48 und Seitenwand 49 geführt ist. Zum Wandelement 48 gehören eine quer verlaufende Rückwand 50 sowie ein mit Wölbungen versehenes Bodenelement 51 zur Aufnahme von Batterien. Ferner gehört zum Wandelement 48 eine Seitenwand 52, die im Abstand und parallel zur Seitenwand 49 liegt. Die Seitenwand 52 enthält eine hier rechteckige Öffnung 53.

Die Figur 3b zeigt die Verriegelungsstange 47, die als Flachstange ausgebildet ist. Sie liegt an der Seitenwand 49 an und ist in ihrer Längsrichtung verschiebbar. Zur Lagerung der Verriegelungsstange 47 an der Seitenwand 49 dienen die bereits erwähnten Führungselemente 44, 45 und 46, wobei die Führungselemente 45 die Verriegelungsstange 47 von unten unterstützen, und zwar im Bereich von Ausnehmungen 54 und 55 an der unteren Längskante der Verriegelungsstange 47. Mit ihrer oberen Längskante liegt die Verriegelungsstange 47 an den Führungselementen 46 an. Der vordere Abschnitt der Verriegelungsstange 47, mit 47a bezeichnet, kommt zwischen den Wänden 49 und 52 zu liegen.

Ein hinterer Abschnitt 47b der Verriegelungsstange 47 weist an seiner oberen Längskante zwei im Abstand zueinander liegende Einkerbungen 56 und 57 auf. Dieser hintere Abschnitt 47b wird durch das bügelförmige Führungselement 44 gegen Abrutschen von der Seitenwand 49 gesichert, das den Abschnitt 47b umgreift. Dieses bügelförmige Führungselemente 44 weist darüber hinaus einen von oben nach unten weisenden Rastansatz auf, der je nach Verschiebestellung der Verriegelungsstange 47 in eine der Einkerbungen 56, 57 greift und die Verriegelungsstange 47 somit blockiert. Das bügelförmige Führungselement 44, der Abschnitt 47b und die Einkerbungen 56, 57 bilden eine Blockiereinrichtung.

An der unteren Längskante der Verriegelungsstange 47 sind Haken 58 angebracht, die in Richtung zur vorderen Gehäuseschale 2 weisen. Diese Haken bestehen aus winkelförmigen Elementen, deren freier Schenkel parallel zur Längsrichtung der Verriegelungsstange 47 verläuft. Im vorliegenden Fall zeigt der freie Schenkel in Richtung zum Batteriegehäuse.

Darüber hinaus befindet sich im vorderen Abschnitt 47a der Verriegelungsstange 47 noch ein seitlicher Ansatz, der das Bezugszeichen 59 trägt. Dieser seitliche Ansatz 59 erstreckt sich durch die Öffnung 53 hindurch in das Batteriefach und bildet dort einen Teil des Bodens des Batteriefachs. Befindet sich im Batteriefach eine Batterie, so liegt diese sowohl auf dem Bodenelement 51 als auch auf dem Ansatz 59 auf. Beide Elemente weisen dazu die gleiche Strukturierung auf. Eine mit dem freien Ende des Ansatzes 59 verbundene dritte Verriegelungsstange 60, die parallel zur Verriegelungsstange 47 verläuft, dient zur Verriegelung der Gehäuseschalen 1 und 2 im unteren Stirnseitenbereich. Der Ansatz 59 ist mit dem entsprechenden Ansatz der gegenüberliegenden Verriegelungsstange verbunden, so daß die dritte Verriegelungsstange 60 mittig liegt.

Die Figur 3c zeigt die entsprechende Seitenwand der vorderen Gehäuseschale 2. An ihrer der Antenne zugewandten Stirnseite ist eine Ausnehmung 61 zur Aufnahme des Positionierungshakens 43 vorgesehen. An der gegenüberliegenden Stirnseite ist eine weitere Ausnehmung 62 vorhanden, in die das freie Ende der weiteren Verriegelungsstange 60 einfahrbar ist. Darüber hinaus sind an der Innenseite der Seitenwand 63 der vorderen Gehäuseschale 2 mehrere Nasen 64 vorhanden, die in die Haken 58 einfahrbar sind, wenn die Verriegelungsstange 47 entsprechend verschoben wird.

Die Figur 3d zeigt einen Zustand der hinteren Gehäuseschale 1 vor der Endmontage der Verriegelungsstange 47. Hier ist der hintere Abschnitt 47b noch nicht in das bügelförmige Führungselement 44 eingefahren, welches z. B. einstückig mit der hinteren Gehäuseschale 1 verbunden sein kann. Man erkennt die Klemmeinrichtung 65, die in eine der Einkerbungen 56 und 57 einrasten kann, und die auch federnd ausgebildet sein kann. Die Klemmeinrichtung 65 kann am Bügel 44 fest montiert sein. Sie kann aber auch direkt an der Seitenwand 49 angebracht sein.

Dagegen zeigt die Figur 3e die hintere Gehäuseschale 1 mit der Verriegelungsstange 47 in ihrer fertigen Montageposition. Hier greift die Klemmeinrichtung 65 in die Einkerbung 57 ein, so daß noch eine Verschiebung der Verriegelungsstange 47 in Richtung zum Batteriefach möglich ist. Eine entgegengesetzte Verschiebung der Verriegelungsstange 47 kann durch einen schräg verlaufenden Abschnitt 47c an ihrer unteren Längskante verhindert werden, der nicht mehr einen Durchtritt der Verriegelungsstange 47 durch das bügelförmige Führungselement 44 nach hinten erlaubt.

Die Figur 3f zeigt nochmal die vordere Gehäuseschale 2.

In der Figur 3g sind die hintere Gehäuseschale 1 und die vordere Gehäuseschale 2 aufeinandergesetzt, jedoch noch nicht miteinander verriegelt. Hier greift lediglich der Positionierungshaken 43 in die Ausnehmung 61 der vorderen Gehäuseschale 2 ein, so daß dadurch eine Relativpositionierung beider Gehäuseschalen 1 und 2 zueinander erfolgt. Wird jetzt die Verriegelungsstange 47 in Richtung zum Batteriefach verschoben, so fahren die Haken 58 über die Nasen 64 und verriegeln damit beide Gehäuseschalen 1 und 2 auch entlang der Seitenwand des Handapparats miteinander. Dieser Zustand ist in Figur 3h gezeigt. Gleichzeitig mit dieser Verschiebung der Verriegelungsstange 47 fährt auch das vordere freie Ende der weiteren Verriegelungsstange 60 in die Ausnehmung 62 der vorderen Gehäuseschale 2 ein, so daß beide Gehäuseschalen 1 und 2 auch in diesem Stirnseitenbereich des Handapparats miteinander verriegelt werden.

Die Verschiebung beider Verriegelungsstangen 47 erfolgt durch Betätigen eines nach hinten abstehenden Ansatzes 66 an der dritten Verriegelungsstange 60. Hierzu muß zunächst der nicht dargestellte Batterieraumdeckel abgenommen werden, um Zugang ins Innere des Batteriefachs zu erhalten. Nach Entfernen der in ihm vorhandenen Batterien und eines eventuell vorhandenen Typenschilds, welches über einer im Bodenelement 51 vorhandenen Aussparung 67 für den Ansatz 66 auf dem Bodenelement 51 befestigt sein könnte, kann dann der Ansatz 66 entsprechend verschoben werden und mit ihm die Verriegelungsstangen 47.

Der Kraftaufwand für die Verschiebung der Verriegelungsstangen 47 aus der Verriegelungsstellung in die Entriegelungsstellung einerseits und aus der Entriegelungsstellung in die Verriegelungsstellung andererseits kann unterschiedlich gewählt werden. Dies kann dadurch erreicht werden, daß die Tiefe der Einkerbungen 56, 57 verschieden gewählt wird. Um durch Verschiebung der Verriegelungsstangen 47 möglichst schwer aus der Verriegelungsstellung herauszukommen, kann die Tiefe der Einkerbung 57 größer gewählt werden, so daß die Klemmeinrichtungen 65 tiefer in die jeweiligen Verriegelungsstangen 47 eingreifen und daher bei deren Längsverschiebung ein größerer Verschiebewiderstand zu überwinden ist.

## Patentansprüche

1. Handapparat für ein Funktelefonsystem, mit einer vorderen Gehäuseschale (2) und einer mit dieser verbindbaren hinteren Gehäuseschale (1), **dadurch gekennzeichnet**, daß er in seinem Innern eine Verriegelungseinrichtung (22, 23; 64, 58) aufweist, die in einer Verriegelungsstellung die Gehäuseschalen (1, 2) miteinander verriegelt und in einer Entriegelungsstellung die Verriegelung aufhebt, und daß er ebenfalls in seinem Innern eine Blockiereinrichtung (30, 32; 57, 65) enthält, die einen selbständigen Übergang der Verriegelungseinrichtung aus der Verriegelungsstellung in die Entriegelungsstellung verhindert.

2. Handapparat nach Anspruch 1, **dadurch gekennzeichnet,** daß die Blockiereinrichtung durch eine Öffnung (15) hindurch betätigbar ist, die sich in einer Außenwand einer (1) der Gehäuseschalen (1, 2) befindet, und die Öffnung (15) durch ein entfernbares Außenwandelement (16) dieser Gehäuseschale (1) verschlossen ist.

3. Handapparat nach Anspruch 1 oder 2, **dadurch gekennzeichnet,** daß zur Verriegelungseinrichtung von einer (2) der Gehäuseschalen (1, 2) getragene Nasen (22; 64) und von der anderen Gehäuseschale (2) getragene Haken (23; 58) gehören, die parallel zu einer Verbindungsebene der Gehäuseschalen (1, 2) verschiebbar sind.

4. Handapparat nach Anspruch 3, **dadurch gekennzeichnet,** daß durch die Blockiereinrichtung die Relativverschiebung zwischen Nasen und Haken parallel zur Verbindungsebene der Gehäuseschalen blockierbar ist.

5. Handapparat nach Anspruch 3 und 4, **dadurch gekennzeichnet,** daß die Gehäuseschalen, wenn sie aufeinanderliegen, parallel zueinander verschiebbar und sowohl die Nasen (22) als auch die Haken (23) fest an ihnen angebracht sind.

6. Handapparat nach Anspruch 5, **dadurch gekennzeichnet,** daß die Blockiereinrichtung wenigstens ein Rastelement enthält, das von einer der Gehäuseschalen (1) getragen wird und hinter eine Kante (32) der anderen Gehäuseschale (2) greift, wenn sich die Verriegelungseinrichtung in der Verriegelungsstellung befindet.

7. Handapparat nach Anspruch 6, **dadurch gekennzeichnet,** daß das Rastelement als Rastarm (26, 27) ausgebildet ist, der schwenkbar an der Gehäuseschale (1) gelagert ist.

8. Handapparat nach Anspruch 7, **dadurch gekennzeichnet,** daß das Rastelement (26, 27) mit einem Zugelement (36) gekoppelt ist, das im Bereich der Öffnung (15) liegt.

9. Handapparat nach Anspruch 8, **dadurch gekennzeichnet,** daß das freie Ende des Zugelements (36) in einer Führung (35) liegt.

10. Handapparat nach Anspruch 8 oder 9, **dadurch gekennzeichnet,** daß das Außenwandelement (16) das Rastelement (26, 27) hinter die Kante (32) drückt, wenn sich die Verriegelungseinrichtung in der Verriegelungsstellung befindet.

11. Handapparat nach Anspruch 10, **dadurch gekennzeichnet,** daß das Außenwandelement (16) in seiner Ebene zwischen zwei Stellungen verschiebbar ist und in jeder Stellung das Zugelement (36) abdeckt.

12. Handapparat nach Anspruch 3, **dadurch gekennzeichnet,** daß zur Verriegelungseinrichtung wenigstens zwei jeweils Nasen (64) oder Haken (58) tragende Verriegelungsstangen (47), die parallel zu einer Verbindungsebene der Gehäuseschalen (1, 2) verschiebbar und an einer (1) der Gehäuseschalengelagert sind, sowie Haken (58) oder Nasen (64) an der anderen Gehäuseschale (2) gehören.

13. Handapparat nach Anspruch 12, **dadurch gekennzeichnet,** daß zur Bildung der Blockiereinrichtung ein Ende (47b) der jeweiligen Verriegelungsstangen (47) in einer Halterung (44) an der einen Gehäuseschale (1) klemmend verschiebbar gehalten ist.

14. Handapparat nach Anspruch 13, **dadurch gekennzeichnet,** daß die Verriegelungsstangen (47) im Bereich ihres anderen Endes (47a) jeweils mit einem in seinen Batterieraum hineinragenden Ansatz (59) versehen sind.

15. Handapparat nach Anspruch 14, **dadurch gekennzeichnet,** daß der Ansatz (59) unterhalb von im Batterieraum befindlichen Batterien zu liegen kommt.

16. Handapparat nach Anspruch 15, **dadurch gekennzeichnet,** daß sich ausgehend vom Ansatz (59) eine weitere Verriegelungsstange (60) zur Verriegelung der Gehäuseschalen (1, 2) im Bereich ihrer Stirnseiten erstreckt.

17. Handapparat nach einem der Ansprüche 12 bis 16, **dadurch gekennzeichnet,** daß die Gehäuseschalen (1, 2) um einen stirnseitigen Punkt (43, 61) zueinander verschwenkbar sind.
